# EUROPÄISCHE PATENTSCHRIFT

(11) **EP 3 689 120 B1**
(45) Veröffentlichungstag und Bekanntmachung des Hinweises auf die Patenterteilung: **06.12.2023**
(21) Anmeldenummer: 20152466.7
(22) Anmeldetag: 17.01.2020
(51) Int. Cl.: A01B 71/04, F16C 23/08, F16C 33/78, A01B 49/02

(54) **LAGEREINHEIT UND LANDWIRTSCHAFTLICHE MASCHINE MIT EINER SOLCHEN LAGEREINHEIT**
BEARING UNIT AND AGRICULTURAL MACHINE WITH SUCH A BEARING UNIT
UNITÉ DE STOCKAGE ET MACHINE AGRICOLE DOTÉ D'UNE TELLE UNITÉ DE STOCKAGE

(30) Priorität: 01.02.2019 DE 102019201353
(43) Veröffentlichungstag der Anmeldung: 05.08.2020
(73) Patentinhaber: Horsch Maschinen GmbH, 92421 Schwandorf (DE)
(72) Erfinder: HASELHOFF, Alexander, 92421 Schwandorf (DE)
(74) Vertreter: Benninger, Johannes

(56) Entgegenhaltungen:
- EP-A1- 2 808 570
- EP-A1- 3 029 344
- EP-A2- 2 886 896
- CN-A- 101 076 677
- CN-A- 108 302 122
- DE-A1-102016 107 948
- JP-A- 2017 207 144
- US-A1- 2015 176 654

## Beschreibung

Die vorliegende Erfindung betrifft eine abdichtende Lagereinheit und/oder eine landwirtschaftliche Maschine mit einer solchen Lagereinheit mit den Merkmalen der unabhängigen Ansprüche.

In der Landwirtschaft werden die unterschiedlichsten Arbeitswerkzeuge zur Bodenbearbeitung eingesetzt. Zur Vorbereitung des Bodens bspw. für die Aussaat wird häufig eine Packerwalze verwendet. Mittels der Packerwalze wird der zuvor mit den Bodenbearbeitungswerkzeugen gelockerte Boden in feinere Strukturen zerteilt sowie verdichtet. Die Packerwalze umfasst eine im Wesentlichen horizontal angeordnete Packerwelle. Zur Lagerung der Packerwelle oder dergleichen werden im Stand der Technik in der Regel handelsübliche Wälzlager, insbesondere in Gestalt von einfach aufgebauten Kugellagern verwendet und/oder eingesetzt.

Derartige Kugellager weisen jedoch zahlreiche Nachteile auf. Beispielsweise sind die Tragzahlen bei den bisher verwendeten Kugellagern oftmals sehr gering, so dass beispielsweise die Lastgrenze der Kugellager bei vollem Tank einer Sämaschine bereits an der Grenze liegen oder leicht überschritten werden kann. Auch ist mit den bisher bekannten Kugellagern ein Schwenken der mittels der Kugellager gelagerten Welle nicht möglich ist. Dies liegt daran, da die Kalotten der bekannten Lagereinheiten nicht für einen dynamischen Ausgleich vorgesehen oder geeignet sind. Zudem neigen derartige Lagereinheiten schnell zum Korrodieren und drohen somit "fest" zu werden, wodurch eine einseitige Belastung und damit eine Überlast entstehen kann.

Auch die Abdichtung der bisher verwendeten Lagereinheiten hat sich als nachteilig erwiesen, da die Dichtungen aufgrund der Kombination aus sich bewegendem Innenring und damit entstehender Pumpwirkung sehr schnell versagen, weil diese die Bewegungen nicht ausgleichen können.

Um die bisher bekannten Nachteile der Kugellager bei der Lagerung von landwirtschaftlichen Arbeitswerkzeugen zumindest etwas abzumildern, werden zur Lagerung von landwirtschaftlichen Arbeitswerkzeugen auch sog. Pendelrollenlager verwendet. Jedoch sind im Stand der Technik kaum abgedichtete Pendelrollenlager bekannt, weil diese immer in einem Gehäuse mit Dichtungen eingebaut werden. Diese Dichtungen bauen aber oft sehr groß und können Winkel und/oder Neigungen nur bedingt ausgleichen.

Aus dem Stand der Technik ist es beispielsweise bekannt, einen verlängerten Innenring für die Dichtungen zu verwenden, so dass beim Kippen des Innenrings, d.h. beim Schwenken z.B. einer Packerwelle die Dichtung den Weg ausgleichen muss. Jedoch unterliegt diese Abdichtung einem hohen Verschleiß, und die Abdichtung kann beim Verkippen und/oder Neigen des Innenrings gegenüber dem Außenring nur bedingt aufrechterhalten werden.

So wird beispielsweise durch die EP 2 808 570 A1 eine Lagereinheit beschrieben, welche zwischen einem Innen- und einem Außenring gelagerte Wälzkörper umfasst. An jedem axialen Ende des Lagers ist ein Dichtungselement vorgesehen, das sich in Kontakt mit dem Innen- und Außenring befindet. Aus den Dokumenten JP 2017 207144 A, CN 108 302 122 A und EP 3 029 344 A1 sind Wälzlager mit ähnlichem Aufbau bekannt.

Durch die CN 101 076 677 A wird weiterhin ein abgedichtetes Pendellager beschrieben, das einen inneren Lagerring mit Laufbahnen für Wälzkörper und einen äußeren Lagerring mit einer Laufbahn für die Wälzkörper aufweist, die radial außerhalb des inneren Lagerrings an mindestens einer Seite des Lagers angeordnet ist. Eine Lagerdichtung ist axial außerhalb der Laufbahnen im Lager angeordnet und zur Überbrückung des Raums zwischen dem inneren und dem äußeren Lagerring ausgebildet.

Zudem zeigt die DE 10 2016 107948 A1 eine Lageranordnung einer Bodenbearbeitungsvorrichtung. Die Bodenbearbeitungsvorrichtung weist in mehreren Reihen angeordnete Bodenbearbeitungswerkzeuge, wie eine rotatorisch gelagerte Messerwalze, auf. Die Messerwalze umfasst eine sich drehende Welle, entlang deren Umfangverlaufes und über deren Breite zahlreiche Messer angeordnet sind. An den Enden der Welle ist jeweils eine Lageranordnung vorgesehen. Über die Lageranordnung kann die Welle an einem Rahmen der Bodenbearbeitungsvorrichtung gelagert werden. Die Dokumente US 2015/176654 A1 und EP 2 886 896 A2 offenbaren weitere bekannte abgedichtete Wälzlagereinheiten zur Lagerung von Arbeitswerkzeugen.

Der Erfindung liegt daher die Aufgabe zugrunde, eine abgedichtete Lagereinheit zur Verfügung zu stellen, bei welcher die im Stand der Technik bekannten Nachteile zumindest weitgehend überwunden werden können und welche einen einfachen und platzsparenden Aufbau besitzt und kostengünstig ist. Außerdem soll eine landwirtschaftliche Maschine zur Verfügung gestellt werden, bei welcher die Lagerung von landwirtschaftlichen Arbeitswerkzeugen einfach aufgebaut ist.

Diese Aufgaben werden durch eine Lagereinheit für landwirtschaftliche Arbeitswerkzeuge und durch eine landwirtschaftliche Maschine mit einer solchen Lagereinheit mit den Merkmalen der unabhängigen Ansprüche gelöst. Weitere vorteilhafte Ausgestaltungen und Weiterbildungen der Erfindung sind in den jeweiligen abhängigen Ansprüchen beschrieben.

Zur Lösung der genannten Aufgaben schlägt die Erfindung eine Wälzlagereinheit für eine Lagerung von insbesondere rotierenden Arbeitswerkzeugen wie beispielsweise Packerwalzen oder sonstigen Walzen oder dergleichen vor. Grundsätzlich eignet sich die erfindungsgemäße Wälzlagereinheit für die unterschiedlichsten Anwendungsfälle, so zur Lagerung von nahezu beliebigen Schwenkwellen oder rotierenden Wellen. Die nachfolgend erläuterten Anwendungsbeispiele, die sich vorrangig auf den landwirtschaftlichen Einsatz und insbesondere auf die Lagerung von landwirtschaftlich einzusetzenden Packerwalzen o. dgl. beziehen, sind insofern nicht einschränkend zu verstehen.

Die erfindungsgemäße Wälzlagereinheit umfasst einen Innenring und einen koaxial dazu angeordneten Außenring. Insbesondere kann vorgesehen sein, dass der Außenring einen Innendurchmesser umfasst, welcher größer als der Innendurchmesser und der Außendurchmesser des Innenrings ausgebildet ist.

Die erfindungsgemäße Wälzlagereinheit umfasst wenigstens eine Reihe umlaufender Wälzkörper, die im vorliegenden Zusammenhang und im Folgenden auch als Wälz- und/oder Rollenelemente bezeichnet sind, welche zwischen dem Innenring und dem Außenring wälzend und/oder rotierend angeordnet sind und somit die beiden Ringe - Innenring und Außenring - bei rotierenden Relativbewegungen unter Abwälzbewegungen der gleichmäßig über den Umfang der Lagerflächen verteilten Wälzkörper gegeneinander abstützen. Die Wälzkörper oder Wälz- und/oder Rollenelemente können bspw. in einem Lagerkäfig gehalten sein; ebenso denkbar ist jedoch die lose Anordnung der Wälzkörper oder Wälz- und/oder Rollenelemente ohne Lagerkäfig, so dass sie bspw. mittels Fettfüllung an ihrem Platz gehalten sind.

Bei einer einreihigen Ausführung der Wälzlagereinheit können die Wälzkörper oder die Wälz- und/oder Rollenelemente bspw. als zylindrische oder ballig geformte Elemente ausgebildet sein, so dass die Wälzlagereinheit bspw. als Tonnenlager oder als Nadellager ausgebildet ist.

Ebenso kann die erfindungsgemäße Wälzlagereinheit wahlweise zumindest in zwei Reihen angeordnete Wälzkörper oder Wälz- und/oder Rollenelemente umfassen, welche zwischen dem Innenring und dem Außenring wälzend und/oder rotierend angeordnet sind. Vorzugsweise sind diese beiden Reihen an jeweils gleichartig geformten und dimensionierten Wälzkörpern oder Wälz- und/oder Rollenelemente nebeneinander angeordnet und überschneiden sich nicht, so dass ein Wälzlager mit hoher Traglast und hoher statischer und dynamischer Belastbarkeit zur Verfügung gestellt wird.

Die Lagereinheit umfasst weiter zumindest zwei Abdichtelemente, welche die zumindest in zwei Reihen oder auch in einer Reihe angeordneten Wälz- und/oder Rollenelemente beidseitig axial abdichten.

Insbesondere kann vorgesehen sein, dass wenigstens eines der zumindest zwei Abdichtelemente mit einer Außenmantelfläche des Innenrings in Oberflächenkontakt steht und/oder auf der Außenmantelfläche des Innenrings aufliegt, so dass dort am Innenring eine Dichtfläche ausgebildet wird. Bei der Dichtfläche kann es sich insbesondere um eine äußere Dichtfläche handeln. Die Außenmantelfläche des Innenrings ist im Bereich der Dichtfläche zumindest abschnittsweise konvex zu einer Mittelachse der Lagereinheit ausgebildet. Wenn in diesem Zusammenhang von einer konvexen Gestaltung die Rede ist, so meint dies eine entsprechende konvexe Kontur oder Gestalt des Längsschnittes durch die Wälzlagereinheit und durch den Innenring. Wenn somit von einer konvex geformten Dichtfläche am Innenring die Rede ist, so meint dies eine im Längsschnitt konvexe Dichtfläche des Innenrings, wodurch dieser über seinen Gesamtumfang eine nach außen gewölbte ballige Kontur aufweist.

Alternativ kann bei der erfindungsgemäßen Wälzlagereinheit auch vorgesehen sein, dass wenigstens eines der zumindest zwei Abdichtelemente mit einer Innenmantelfläche des Außenrings in Oberflächenkontakt steht und/oder auf der Innenmantelfläche des Außenrings aufliegt, so dass dort am Außenring eine Dichtfläche ausgebildet wird. Bei der Dichtfläche kann es sich insbesondere um eine äußere Dichtfläche handeln. Die Innenmantelfläche des Außenrings ist im Bereich der Dichtfläche vorzugsweise zumindest abschnittsweise konkav zu einer Mittelachse der Lagereinheit ausgebildet. Wenn in diesem Zusammenhang von einer konkaven Gestaltung des Außenrings bzw. dessen Innenmantelfläche die Rede ist, so meint dies eine entsprechende konkave Kontur oder Gestalt des Längsschnittes durch die Wälzlagereinheit und durch den Außenring. Wenn somit von einer konkav geformten Dichtfläche am Außenring die Rede ist, so meint dies eine im Längsschnitt konkave Dichtfläche des Außenrings, wodurch dieser über seinen Gesamtumfang eine nach innen gewölbte hohlkehlartige Kontur aufweist.

Die Wälzlagereinheit kann derart ausgebildet sein, dass vergleichsweise hohe axiale und radiale Kräfte und Belastungen aufgenommen werden können. Insbesondere kann der Innenring mit den zumindest in einer Reihe oder wahlweise auch in zwei Reihen angeordneten Wälzkörper oder Wälz- und/oder Rollenelementen gegenüber dem Außenring zumindest teilweise verkippbar und/oder neigbar ausgebildet sein. Aufgrund der zumindest abschnittsweisen konvexen Ausführung der Außenmantelfläche des Innenrings und/oder der zumindest abschnittsweise konkaven Ausführung der Innenmantelfläche des Außenrings können folglich auch dynamische Fluchtungsfehler ausgeglichen werden, d.h. bei einem Kippen und/oder Neigen des Innenrings mit den zumindest in einer Reihe oder wahlweise in zwei Reihen angeordneten Wälzkörper oder Wälz- und/oder Rollenelementen gegenüber dem Außenring kann das wenigstens eine Abdichtelement entlang der zumindest abschnittsweisen konvex ausgebildeten Außenmantelfläche des Innenrings und/oder entlang der zumindest abschnittsweise konkav ausgebildeten Innenmantelfläche des Außenrings gleiten und für eine permanente und sichere Abdichtung der Wälzlagereinheit sorgen.

Es kann vorgesehen sein, dass die Außenmantelfläche des Innenrings zumindest abschnittsweise unterschiedlich gewölbt ausgebildet ist. Gleiches kann wahlweise für die Innenmantelfläche des Außenrings gelten, die ebenfalls abschnittsweise unterschiedlich gewölbt ausgebildet sein kann.

Gemäß einer bevorzugten Ausführungsform der Erfindung kann die Außenmantelfläche des Innenrings im tragenden Bereich der zumindest in einer Reihe oder wahlweise auch in zwei Reihen angeordneten Wälzkörper oder Wälz- und/oder Rollenelemente zumindest abschnittsweise konkav zu einer Mittelachse der Lagereinheit ausgebildet sein. Aufgrund dessen können die Reibung und der Verschleiß der zumindest zwei in Reihen angeordneten Wälz- und/oder Rollenelemente zumindest weitgehend gering gehalten werden.

Da zudem als Wälzkörper vorzugsweise leicht tonnenförmig ausgebildete Wälz- und/oder Rollenelemente zum Einsatz kommen können, ist es bevorzugt, wenn auch die zugehörigen Laufflächen korrespondierende geformt sind, um diesen tonnenförmig ausgebildeten Wälzkörpern auch eine entsprechend geformte Aufnahme bieten zu können.

Gemäß einer alternativen Ausführungsform der Erfindung wäre es auch denkbar, dass die Außenmantelfläche des Innenrings im tragenden Bereich der zumindest zwei in Reihen angeordneten Wälz- und/oder Rollenelemente zumindest abschnittsweise konvex und/oder plan, d.h. in diesem Fall in zylindrischer Gestalt, zur Mittelachse der Lagereinheit ausgebildet ist.

Weiter kann die Außenmantelfläche des Innenrings an ihren Endbereichen einseitig oder beidseitig zumindest abschnittsweise plan bzw. zylindrisch ausgebildet sein.

Insbesondere kann vorgesehen sein, dass die konvexen und/oder konkaven und/oder planen oder zylindrischen Bereiche und/oder Abschnitte der Außenmantelfläche des Innenrings vorzugsweise stufenlos ineinander übergehen.

Gemäß einer bevorzugten Ausführungsform der vorliegenden Lagereinheit kann der Innenring insbesondere eine Innenmantelfläche umfassen, welche plan oder hohlzylindrisch ausgebildet ist, d.h. der Innenring kann eine Aufnahme bereitstellen, in welche beispielsweise stirnseitig angeordnete Lagerstummel oder Wellenabschnitte des mindestens einen landwirtschaftlichen Arbeitswerkzeugs aufgenommen werden können.

Darüber hinaus kann eine Innenmantelfläche des Außenrings im Bereich der Laufflächen für die Wälzkörper plan (d.h. hohlzylindrisch) oder gewölbt ausgebildet sein. Insbesondere kann die Innenmantelfläche des Außenrings korrespondierend zu den zumindest in einer Reihe oder wahlweise in zwei Reihen angeordneten Wälzkörpern oder Wälz- und/oder Rollenelementen ausgebildet sein, so dass die in wenigstens einer Reihe oder wahlweise in zwei Reihen angeordneten Wälzkörper oder Wälz- und/oder Rollenelemente entlang der Innenmantelfläche des Außenrings wälzend und/oder rotierend angeordnet sind bzw. wälzen und/oder rotieren können.

Weiter kann vorgesehen sein, dass die Außenmantelfläche des Außenrings plan, d.h. zylindrisch, und/oder konvex und/oder konkav zur Mittelachse (bezogen auf einen Längsschnitt) der Lagereinheit ausgebildet ist.

Zudem kann vorgesehen sein, dass wenigstens eines der zumindest zwei Abdichtelemente zumindest zwei insbesondere voneinander beabstandete Dichtlippen umfasst, welche winkelig zueinander angeordnet sind. Die zumindest zwei Dichtlippen können in eine innere Dichtlippe und in eine äußere Dichtlippe unterschieden werden.

Bei den Abdichtelementen kann es sich insbesondere um eine an die Wälzlagereinheit angepasste und entsprechend dimensionierte Bauform bzw. Ausführungsvariante von Wellendichtringen handeln.

Wenigstens eines der zumindest zwei Abdichtelemente kann L-förmig ausgebildet sein; d.h. wenigstens eines der zumindest zwei Abdichtelemente kann einen kurzen bzw. kürzeren Steg und einen langen bzw. längeren Steg umfassen, wobei sich vom langen Steg die zumindest zwei Dichtlippen erstrecken und/oder wobei die zumindest zwei Dichtlippen am langen Steg angeordnet sind. Alternativ können die zumindest zwei Stege gleich lang oder annähernd gleich lang ausgebildet sein.

Damit die zumindest zwei Dichtlippen die Lagereinheit abdichten können, können die zumindest zwei Dichtlippen gegen die Außenmantelfläche des Innenrings gepresst und/oder dabei in ihrer Form gestaucht werden, so dass eine dichtende Verbindung bzw. dichtende Gleitfläche ausgebildet wird. Insbesondere können die zumindest zwei Dichtlippen in dem Bereich auf der Außenmantelfläche des Innenrings gepresst und/oder gestaucht werden, welcher zumindest abschnittsweise konvex ausgebildet ist. Damit können die zumindest zwei Dichtlippen beim Verkippen und/oder Neigen des Innenrings mit den darauf liegenden zumindest in einer Reihe oder wahlweise in zwei Reihen angeordneten Wälz- und/oder Rollenelementen oder Wälzkörpern gegenüber dem Außenring entlang der konvex ausgebildeten Außenmantelfläche des Innenrings gleiten und für eine Abdichtung der Lagereinheit sorgen.

Bei der alternativen Bauvariante, bei der die Dichtlippen nach außen weisen und gegen die Innenmantelflächen des Außenringes weisen, kann im Interesse einer zuverlässigen Abdichtung der Wälzlagereinheit durch die zumindest zwei Dichtlippen vorgesehen sein, dass die zumindest zwei Dichtlippen gegen die Innenmantelfläche des Außenrings gepresst und/oder dabei in ihrer Form gestaucht werden, so dass eine dichtende Verbindung bzw. dichtende Gleitfläche ausgebildet wird. Insbesondere können die zumindest zwei Dichtlippen in dem Bereich auf der Innenmantelfläche des Außenrings gepresst und/oder gestaucht werden, welcher zumindest abschnittsweise konkav ausgebildet ist. Damit können die zumindest zwei Dichtlippen beim Verkippen und/oder Neigen des Außenrings mit den daran abwälzenden zumindest in einer Reihe oder wahlweise in zwei Reihen angeordneten Wälz- und/oder Rollenelementen oder Wälzkörpern gegenüber dem Innenring entlang der konkav ausgebildeten Innenmantelfläche des Außenrings gleiten und für eine Abdichtung der gesamten Wälzlagereinheit sorgen.

Alternativ können auch die zumindest zwei Abdichtelemente identisch ausgebildet sein, so dass auf beiden Seiten der Lagereinheit eine dichtende Gleitfläche ausgebildet wird.

Erfindungsgemäß ist die Lagereinheit zumindest abschnittsweise von einem Gehäuse aufgenommen, welches insbesondere einteilig oder wahlweise auch mehrteilig ausgebildet sein kann. Das Gehäuse ist koaxial zum Innenring und zum Außenring angeordnet, d.h. das Gehäuse, der Außenring und der Innenring können insbesondere eine gemeinsame Achse aufweisen, bei welcher es sich sinnvollerweise um die Mittelachse der Lagereinheit handeln kann.

Das Gehäuse kann sich aus zumindest zwei Abschnitten, insbesondere aus einem zylindrischen Abschnitt und aus einem Befestigungsabschnitt zusammensetzen. Der zylindrische Abschnitt und der Befestigungsabschnitt des Gehäuses können eine Aufnahme umfassen, mittels welcher die Wälzlagereinheit am oder im vorgesehen Montage- oder Einbauort aufgenommen werden kann. Dabei kann ein Innendurchmesser der Aufnahme bzw. des Gehäuses sinnvollerweise korrespondierend zum Außendurchmesser des Außenrings ausgebildet und dimensioniert sein. Vorzugsweise kann die Aufnahme des Gehäuses eine Innenfläche bzw. Innenmantelfläche umfassen, welche korrespondierend zur Kontur der Außenmantelfläche des Außenrings ausgebildet ist. Diese Innenfläche oder Innenmantelfläche ist typischerweise hohlzylindrisch ausgebildet, während die Außenmantelfläche des Außenrings der Wälzlagereinheit typischerweise eine hierzu korrespondierende und entsprechend dimensionierte zylindrische Kontur aufweisen kann.

Das Gehäuse kann die Lagereinheit oder Wälzlagereinheit zumindest abschnittsweise derart aufnehmen, dass zumindest eine Stirnseite des Gehäuses auf der Außenmantelfläche des Innenrings bündig auf- oder anliegt und/oder in Oberflächenkontakt steht. Dabei kann die Stirnseite des Gehäuses insbesondere auf dem Bereich der Außenmantelfläche des Innenrings bündig aufliegen und/oder in Oberflächenkontakt stehen, welcher Bereich vorzugsweise zumindest abschnittsweise plan ausgebildet ist.

Weiter kann vorgesehen sein, dass der Befestigungsabschnitt des Gehäuses durch einen quadratischen Querschnitt gebildet ist. Der Befestigungsabschnitt kann zumindest zwei Bohrungen, vorzugsweise vier Bohrungen umfassen. Die Aufnahme des Gehäuses und damit die Lagereinheit als solche kann mittels einer Abdeckplatte oder dergleichen abgedeckt und/oder verschlossen werden. Die Abdeckplatte kann beispielsweise über Schrauben, welche in die zumindest zwei Bohrungen eingesetzt werden können, an einer Stirnseite des Befestigungsabschnitts montiert und/oder befestigt werden.

Es ist erfindungsgemäß vorgesehen, dass wenigstens eines der zumindest zwei Abdichtelemente am Gehäuse, insbesondere an einer Innenseite des Gehäuses, befestigt ist. Das wenigstens eine der zumindest zwei Abdichtelemente kann unter Ausbildung einer form-, stoff- und/oder kraftschlüssigen Verbindung an der Innenseite des Gehäuses befestigt und/oder montiert sein. Beispielsweise kann wenigstens eines der zumindest zwei Abdichtelemente an die Innenseite des Gehäuses geklebt und/oder verschraubt und/oder gepresst sein.

Alternativ kann die Innenseite des Gehäuses eine umlaufende Aussparung beispielsweise in Form einer Nut umfassen, in welche wenigstens eines der zumindest zwei Abdichtelemente eingesetzt und damit am Gehäuse befestigt werden kann.

Gemäß einer bevorzugten Ausführungsform der erfindungsgemäßen Lagereinheit kann wenigstens eines der zumindest zwei Abdichtelemente L-förmig ausgebildet sein, wobei insbesondere der kurze bzw. kürzere Steg an der Innenseite des Gehäuses befestigt und/oder montiert sein kann, so dass jeweils der lange bzw. längere Steg zumindest weitgehend parallel zu einer Seitenfläche bzw. Stirnseite des Gehäuses verläuft und/oder angeordnet ist.

Weiter kann zumindest ein weiteres Abdichtelement vorgesehen sein, welches die zumindest in zwei Reihen angeordneten Wälz- und/oder Rollenelemente einseitig oder beidseitig axial abdichten, so dass eine weitere Dichtfläche und/oder weitere dichtende Fläche ausgebildet wird. Bei der weiteren Dichtfläche kann es sich insbesondere um eine innere Dichtfläche handeln.

Das zumindest eine weitere Abdichtelement kann insbesondere am Außenring befestigt und/oder montiert sein. Der Außenring kann hierfür zumindest eine umlaufende Aussparung, beispielsweise in Form einer Nut umfassen, in welche das zumindest eine weitere Abdichtelement eingesetzt werden kann. Selbstverständlichen wären auch sämtliche weitere Verbindungs- und/oder Befestigungsmethoden denkbar, um das zumindest eine weitere Abdichtelemente am Außenring, insbesondere an der Innenmantelfläche des Außenrings zu befestigen.

Das zumindest eine weitere Abdichtelement kann insbesondere in dem Bereich gegen die Außenmantelfläche des Innenrings gepresst und/oder in ihrer Form gestaucht angeordnet sein, welcher Bereich zumindest abschnittsweise konkav oder konvex oder plan ausgebildet ist.

Da bei der erfindungsgemäßen Lagereinheit eine innere Dichtfläche und eine äußere Dichtfläche erzeugt und/oder geschaffen werden, kann die Lagereinheit folglich in mehreren Ebenen und/oder Dichtflächen abgedichtet werden, wodurch der Verschleiß der erfindungsgemäßen Lagereinheit reduziert werden kann.

Weiter kann zwischen wenigstens einem der zumindest zwei Abdichtelemente und dem zumindest einen weiteren Abdichtelement ein Hohlraum vorgesehen sein und/oder ausgebildet werden. Der Hohlraum kann mit zumindest einem Schmiermittel oder dergleichen befüllbar sein und/oder befüllt werden. Bei dem zumindest einen Schmiermittel kann es sich beispielsweise um ein Fett oder dergleichen handeln, welches für die Schmierung der erfindungsgemäßen Lagereinheit erforderlich ist.

Gemäß einer Weiterbildung der Erfindung kann vorgesehen sein, dass zwei oder mehr unterschiedliche Schmiermittel verwendet werden, um somit je nach Abschnitt der Wälzlagereinheit jeweils optimale Schmiereigenschaften zu erhalten. So können bspw. zwei unterschiedliche Schmiermittel vorgesehen sein, welche jeweils unterschiedliche Viskosität aufweisen.

Insbesondere können zwischen den zwei Abdichtelementen und/oder zwischen dem Abdichtelement und den Wälz- und/oder Rollenelementen unterschiedliche Schmiermittel verwendet und eingesetzt werden. Insbesondere können Schmiermittel mit unterschiedlichen Schmiereigenschaften und/oder Viskositäten verwendet und/oder eingesetzt werden.

Wie bereits erwähnt, können die zumindest zwei Dichtlippen wenigstens eines der zumindest zwei Abdichtelemente in eine innere Dichtlippe und in eine äußere Dichtlippe unterschieden und/oder unterteilt werden. Die innere Dichtlippe kann insbesondere dazu dienen, dass das zumindest eine im Hohlraum befindliche Schmiermittel nicht ungehindert austreten und/oder auslaufen kann. Die äußere Dichtlippe kann insbesondere ein Eindringen von Schmutz in den Hohlraum verhindern; d.h. die zumindest zwei Dichtlippen können unterschiedliche Funktionen wahrnehmen.

Zusätzlich wäre es denkbar, dass der Hohlraum von außen mittels zumindest eines Schmiermittels befüllbar ist, so dass damit der Schmutz aus dem Hohlraum entfernt und/oder herausgepresst werden kann.

Die Erfindung betrifft weiter eine landwirtschaftliche Maschine mit mindestens einem insbesondere rotierenden oder schwenkbaren landwirtschaftlichen Arbeitswerkzeug oder dergleichen, wobei das mindestens eine landwirtschaftliche Arbeitswerkzeug über eine gemäß einer der zuvor beschriebenen Ausführungsvarianten ausgebildeten Wälzlagereinheit an einem Maschinenrahmen der landwirtschaftlichen Maschine gelagert ist.

Das mindestens eine landwirtschaftliche Arbeitswerkzeug kann stirnseitig jeweils einen Lagerstummel oder Wellenstummel o. dgl. umfassen, welche Lagerstummel oder Wellenstummel o. dgl. jeweils zumindest abschnittsweise von der erfindungsgemäßen Wälzlagereinheit aufgenommen sind und/oder werden.

Es sei betont, dass die Wälzlagereinheit jeweils gemäß einem der zuvor beschriebenen Ausführungsvarianten ausgebildet ist und/oder ausgebildet sein kann. Wenn also im Zusammenhang der vorliegenden Erfindungsbeschreibung von einer Lageranordnung die Rede ist, so kann dieser Begriff immer auch durch eine landwirtschaftliche Maschine mit einer solchen Wälzlagereinheit ersetzt werden und umgekehrt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in einer schematischen Perspektivansicht eine Ausführungsform einer landwirtschaftlichen Bodenbearbeitungsvorrichtung, die vorzugsweise mehrere der in den Figuren 2 bis 8 gezeigten Wälzlagereinheiten zur Lagerung rotierender Arbeitswerkzeuge aufweisen kann.
Fig. 2 zeigt in einer Schnittansicht eine Ausführungsform einer erfindungsgemäßen Wälzlagereinheit zur Lagerung einer Packerwelle der in Fig. 1 gezeigten landwirtschaftlichen Bodenbearbeitungsvorrichtung.
Fig. 3 zeigt in einer Detailansicht die in Fig. 2 gezeigte Abdichtung der Wälzlagereinheit.
Fig. 4 zeigt in einer schematischen Perspektivansicht eine Ausführungsform eines Gehäuses, welches die Wälzlagereinheit zumindest abschnittsweise aufnehmen kann.
Fig. 5 zeigt in einem weiteren Längsschnitt eine alternative Ausführungsform einer erfindungsgemäßen Wälzlagereinheit zur Lagerung einer Packerwelle der in Fig. 1 gezeigten landwirtschaftlichen Bodenbearbeitungsvorrichtung.
Fig. 6 zeigt in einem Detail-Längsschnitt die in Fig. 5 gezeigte Abdichtung der dort im Längsschnitt dargestellten Wälzlagereinheit.
Fig. 7 zeigt die in den Figuren 5 und 6 gezeigte alternative Ausführungsvariante der Wälzlagereinheit in einem weiteren Längsschnitt, wobei hier der innere Lagerring mitsamt den dort gelagerten Wälzkörpern gegenüber dem äußeren Lagerring leicht verkippt und aus der exakt koaxialen Lage gebracht ist.
Fig. 8 zeigt in einem Detail-Längsschnitt die in Fig. 7 gezeigte verkippte Lage der dort im Längsschnitt dargestellten Wälzlagereinheit.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Lagereinheit ausgestaltet sein kann und stellen keine abschließende Begrenzung dar.

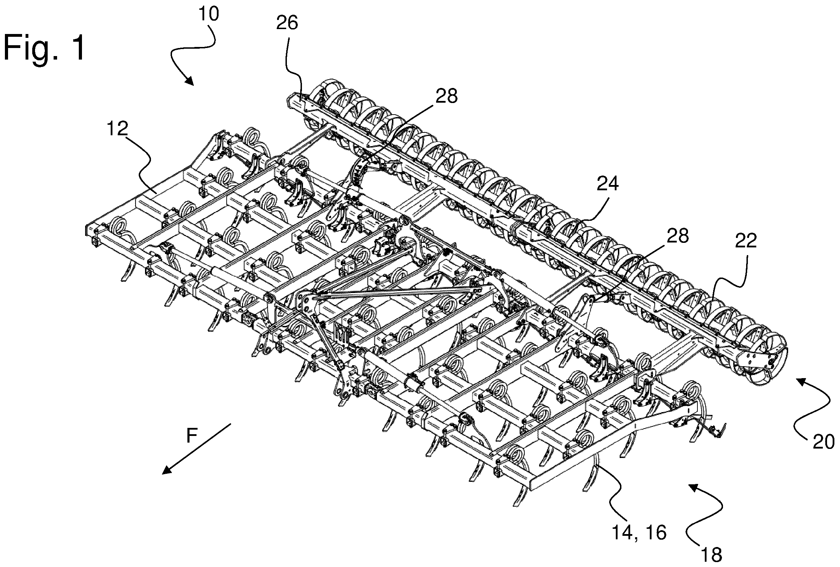

Die Fig. 1 zeigt in einer schematischen Perspektivansicht eine Ausführungsform eines landwirtschaftlichen Bodenbearbeitungsgeräts 10. Das landwirtschaftliche Bodenbearbeitungsgerät 10 wird von einer hier nicht dargestellten landwirtschaftlichen Zugmaschine wie beispielsweise einem Traktor gezogen.

Das landwirtschaftliche Bodenbearbeitungsgerät 10 umfasst einen Maschinenrahmen 12, welcher in Fahrtrichtung F vier Reihen 18 mit jeweils beabstandet zueinander angeordneten Bodenbearbeitungswerkzeugen bzw. Arbeitswerkzeugen 14 aufweist. Bei den Arbeitswerkzeugen 14 handelt es sich jeweils um Federzinken 16, die jeweils in der jeweiligen Reihe 18 beabstandet zueinander angeordnet, jedoch in Fahrtrichtung F versetzt hintereinander angeordnet sind. Die Federzinken 16 dienen beispielsweise zur Lockerung und Zerkrümelung des Erdreichs.

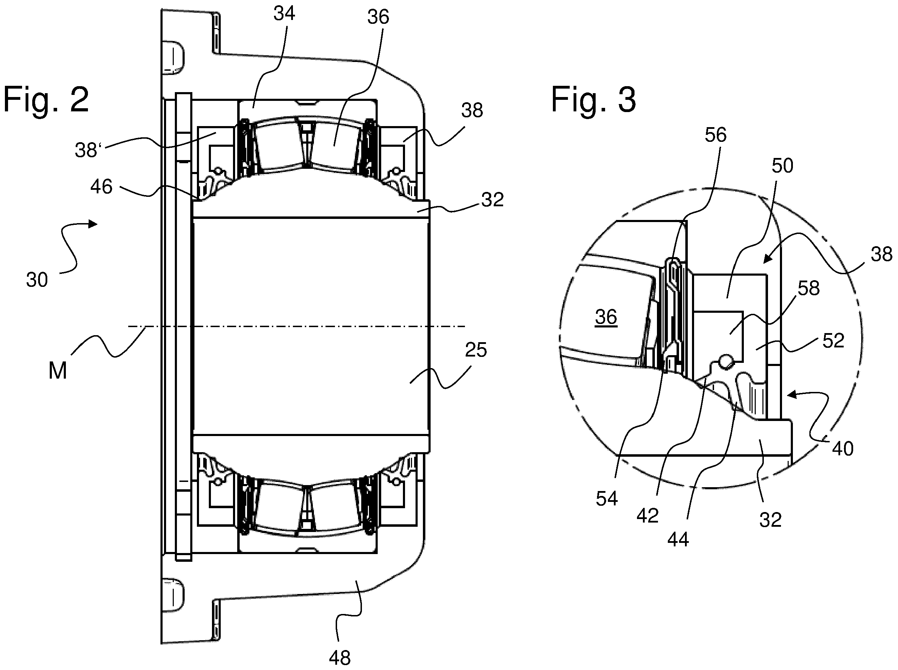

In Fahrtrichtung F ist den vier Reihen 18 mit Federzinken 16 eine rotierende Packereinheit bzw. eine Packerwalze 20 mit einer Vielzahl von Packerringen 22 nachgeordnet. Die Packereinheit 20 dient insbesondere zur Einebnung und/oder Verdichtung des zuvor mittels den Federzinken 16 gelockerten Erdreichs. Die Packereinheit 20 umfasst eine rotierende Welle 24, welcher über eine hier nicht dargestellte Lagereinheit 30 (vgl. Figuren 2, 3) an einen quer zur Fahrtrichtung F verlaufenden Querträger 26 gelagert ist. Der Querträger 26 ist über Tragarme am Maschinenrahmen 12 des landwirtschaftlichen Bodenbearbeitungsgeräts 10 verschwenkbar gelagert. Zum Verschwenken der Packereinheit bzw. Packerwalze 20 sind Stellelemente 28 vorgesehen, welche beispielsweise als hydraulische, pneumatische oder elektrische Zylinder ausgebildet sein können.

Die Fig. 2 zeigt in einer Schnittansicht eine Ausführungsform einer erfindungsgemäßen Wälzlagereinheit 30, die im vorliegenden Zusammenhang teilweise auch vereinfacht als Lagereinheit 30 bezeichnet wird. Die Wälzlagereinheit oder Lagereinheit 30 umfasst einen Innenring 32 mit einem definierten Innendurchmesser. Durch den Innendurchmesser des Innenrings 32 wird eine Aufnahme bereitgestellt, welche korrespondierend zu den an der rotierenden Welle 24 stirnseitig angebrachten Lagerstummeln 25 ausgebildet ist; d.h. die Aufnahme des Innenrings 32 kann jeweils die Lagerstummel 25 der rotierenden Welle 24 zumindest abschnittsweise aufnehmen.

Die Wälzlagereinheit 30 umfasst weiterhin einen Außenring 34, welcher koaxial zum Innenring 32 angeordnet ist; d.h. der Innenring 32 und der Außenring 34 weisen eine gemeinsame Mittelachse M auf. Der Außenring 34 umfasst einen Innendurchmesser, welcher größer als der Innendurchmesser und Außendurchmesser des Innenrings 32 ausgebildet ist.

Zwischen Innenring 32 und Außenring 34, insbesondere zwischen einer Innenmantelfläche des Außenrings 34 und einer Außenmantelfläche 46 des Innenrings 32, sind zumindest in zwei Reihen angeordnete Wälz- und/oder Rollelemente 36 vorgesehen, welche zwischen dem Innenring 32 und dem Außenring 34 wälzend und/oder rotierend angeordnet sind.

Wie es aus der Fig. 2 weiter hervorgeht, ist die Innenmantelfläche des Außenrings 34 leicht nach innen gewölbt ausgebildet, so dass insbesondere die zumindest zwei in Reihen angeordneten Wälz- und/oder Rollenelemente 36 entlang der Innenmantelfläche des Außenrings 34 wälzen und/oder rotieren können.

Zur axialen Abdichtung der Wälzlagereinheit 30, insbesondere der zumindest in zwei Reihen angeordneten Wälz- und/oder Rollenelemente 36, sind beidseitig zumindest zwei Abdichtelemente 38, 38' vorgesehen. Die Abdichtelemente 38, 38' stehen mit der Außenmantelfläche 46 des Innenrings 32 in Oberflächenkontakt und/oder liegen auf der Außenmantelfläche 46 des Innenrings 32 auf, so dass eine Dichtfläche gebildet wird. Bei dieser Dichtfläche handelt es sich insbesondere um eine äußere Dichtfläche.

Wie es aus der Fig. 2 hervorgeht, ist die Kontur der Außenmantelfläche 46 des Innenrings 32 unterschiedlich ausgebildet. Die zumindest zwei in Reihen angeordneten Wälz- und/oder Rollenelemente 36 sind etwa im mittleren Bereich der Außenmantelfläche 46 des Innenrings 32 angeordnet und liegen in diesem Bereich auf der Außenmantelfläche 46 des Innenrings 32 auf, so dass dieser Bereich der Außenmantelfläche 46 des Innenrings 32 als tragender Bereich bezeichnet werden kann.

Insbesondere ist die Außenmantelfläche 46 des Innenrings 32 im tragenden Bereich der zumindest zwei in Reihen angeordneten Wälz- und/oder Rollenelemente 36 zumindest abschnittsweise konkav zu einer Mittelachse M der Lagereinheit 30 ausgebildet.

Wie weiter aus der Fig. 2 hervorgeht, ist die Außenmantelfläche 46 des Innenrings 32 im Bereich der Dichtfläche zumindest abschnittsweise konvex zu einer Mittelachse M der Lagereinheit 30 ausgebildet, d.h. die Außenmantelfläche 46 des Innenrings 32 ist in ihren verschiedenen Bereichen und/oder Abschnitten unterschiedlich gewölbt. Die unterschiedlichen Wölbungen der Außenmantelfläche 46 des Innenrings 32 können stufenlos ineinander übergehen.

Der Innenring 32 mit den darauf liegenden zumindest zwei in Reihen angeordneten Wälz- und/oder Rollenelementen 36 ist gegenüber dem Außenring 34 verkippbar und/oder neigbar. Da die Außenmantelfläche 46 des Innenrings 32 im Bereich der Dichtfläche konvex zu einer Mittelachse M der Wälzlagereinheit 30 ausgebildet ist, können die zumindest zwei Abdichtelemente 38, 38' unabhängig vom Grad der Verkippung und/oder der Neigung des Innenrings 32 mit den darauf liegenden zumindest zwei in Reihen angeordneten Wälz- und/oder Rollenelementen 36 gegenüber dem Außenring 34 mit der Außenmantelfläche 46 des Innenrings 32 in Oberflächenkontakt stehen und für eine sichere und permanente Abdichtung sorgen.

Wie es weiter aus der Fig. 2 hervorgeht, ist die Wälzlagereinheit 30 zumindest abschnittsweise von einem Gehäuse 48 aufgenommen, welches Gehäuse 48 koaxial zum Innenring 32 und zum Außenring 34 angeordnet ist.

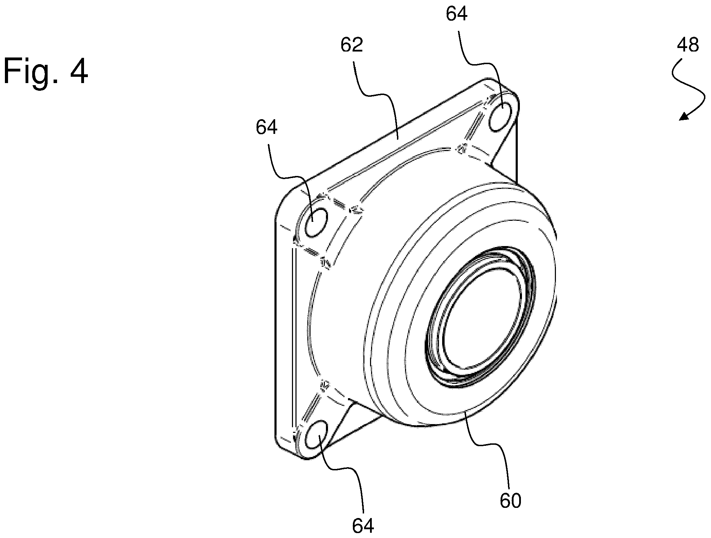

Das Gehäuse 48, welches durch die Fig. 4 näher beschrieben wird, nimmt die Wälzlagereinheit 30 derart auf, dass zumindest eine Stirnseite des Gehäuses 48 bündig mit dem Innenring 32 abschließt und auf der Außenmantelfläche 46 des Innenrings 32 aufliegt.

In der Fig. 3 ist im Detail die Abdichtung der Wälzlagereinheit 30 mittels der zumindest zwei in Fig. 2 dargestellten Abdichtelemente 38, 38' abgebildet. Die zumindest zwei Abdichtelemente 38, 38' sind L-förmig ausgebildet und umfassen einen kurzen bzw. kürzeren Steg 50 und einen langen bzw. längeren Steg 52. Der kurze Steg 50 der zumindest zwei Abdichtelemente 38, 38' ist an einer Innenseite bzw. Innenfläche des Gehäuses 48 befestigt und/oder montiert. Insbesondere ist der kurze Steg 50 der zumindest zwei Abdichtelemente 38, 38' unter Ausbildung einer form-, stoff- und/oder kraftschlüssigen Verbindung an die Innenseite des Gehäuses 48 befestigt und/oder montiert. Beispielsweise kann der kurze Steg 50 an die Innenseite des Gehäuses 48 geklebt und/oder verschraubt sein.

Der kurze Steg 50 ist derart an die Innenseite bzw. Innenfläche des Gehäuses 48 befestigt und/oder montiert, so dass der lange Steg 52 im Wesentlichen parallel zu einer Stirnseite des Gehäuses 48 verläuft und/oder angeordnet ist. Insbesondere ist der lange Steg 52 zumindest weitgehend senkrecht zur Mittelachse M angeordnet.

Vom langen Steg 52 der zumindest zwei Abdichtelemente 38, 38' erstrecken sich zumindest zwei Dichtlippen 40, welche in eine innere Dichtlippe 42 und in eine äußere Dichtlippen 44 unterschieden werden können. Die zumindest zwei Dichtlippen 40 können winkelig und damit beabstandet zueinander angeordnet sein. Die zumindest zwei Dichtlippe 40 sind derart angeordnet, dass diese gegen die Außenmantelfläche 46 des Innenrings 32 gepresst und/oder gestaucht werden. Insbesondere werden die zumindest zwei Dichtlippen 40 gegen denjenigen Bereich bzw. Abschnitt der Außenmantelfläche 46 des Innenrings 32 gepresst, welcher in Bezug auf die Mittelachse M der Lagereinheit 30 konvex ausgebildet ist. Auf diese Weise kann eine Dichtfläche, insbesondere eine äußere Dichtfläche, ausgebildet werden.

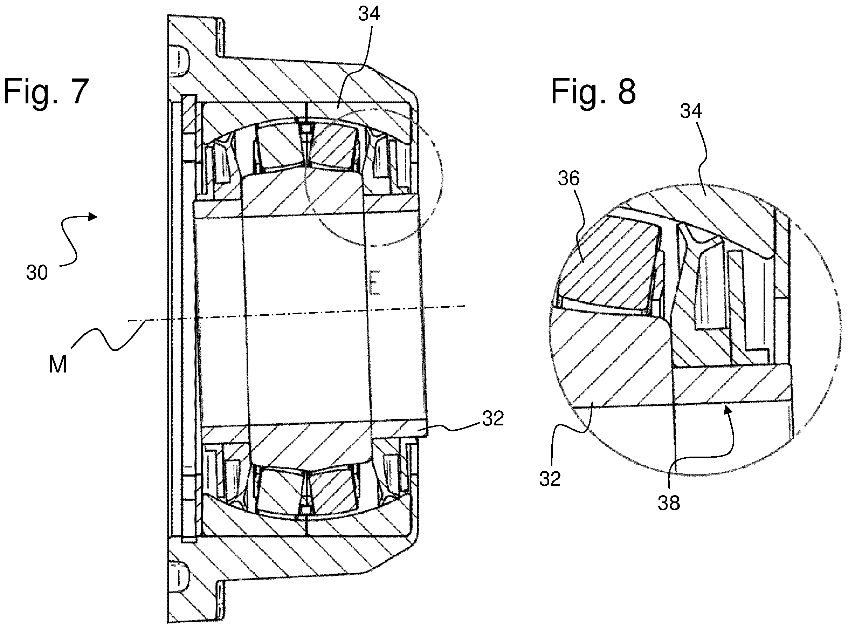

Damit können die Dichtlippen 40 bei einem Verkippen und/oder bei einem Neigen des Innenrings 32 mit den darauf liegenden zumindest in zwei Reihen angeordneten Wälz- und/oder Rollenelementen 36 gegenüber dem Außenring 34 (vgl. Fig. 7 und Fig. 8) entlang der konvex ausgebildeten Außenmantelfläche 46 des Innenrings 32 gleiten und für eine Abdichtung der Lagereinheit 30 sorgen.

Gemäß der Fig. 3 sind zwei weitere Abdichtelemente 54 vorgesehen, welche für eine zusätzliche Abdichtung der Lagereinheit 30 sorgen. Die zumindest zwei weiteren Abdichtelemente 54 dichten die zumindest zwei in Reihen angeordneten Wälz- und/oder Rollenelemente 36 beidseitig axial ab. Die zumindest zwei weiteren Abdichtelemente 54 werden insbesondere derart gegen die Außenmantelfläche 46 des Innenrings 32 gepresst und/oder dabei in ihrer Form gestaucht, so dass in diesem Bereich eine weitere Dichtfläche ausgebildet wird. Bei der weiteren Dichtfläche handelt es sich insbesondere um eine innere Dichtfläche.

Dabei werden die zumindest zwei weiteren Abdichtelemente 54 jeweils derart in dem Bereich gegen die Außenmantelfläche 46 des Innenrings 32 gepresst und/oder dabei in ihrer Form gestaucht, welcher Bereich zumindest abschnittsweise konvex ausgebildet ist.

Die zumindest zwei weiteren Abdichtelemente 54 sind jeweils an der Innenmantelfläche des Außenrings 34 befestigt und/oder montiert. Die Innenmantelfläche des Außenrings 34 kann insbesondere zumindest zwei umlaufende Aussparungen 56 beispielsweise in Form einer Nut umfassen, in welche Aussparungen 56 jeweils die zumindest zwei weiteren Abdichtelemente 54 eingesetzt werden können.

Zwischen den zumindest zwei Abdichtelementen 38, 38' und den zumindest zwei weiteren Abdichtelementen 54 wird jeweils ein Hohlraum 58 ausgebildet, welcher mit zumindest einem hier nicht dargestellten Schmiermittel befüllt werden kann. Das zumindest eine Schmiermittel kann beispielsweise durch Fett oder dergleichen ausgebildet sein, welches dazu geeignet ist, die Lagereinheit 30 ausreichend zu schmieren.

Das Auslaufen und/oder Austreten des zumindest einen im Hohlraum 58 befindlichen Schmiermittels wird insbesondere mittels der inneren Dichtlippe 42 verhindert, da diese für eine Abdichtung des Hohlraums 58 sorgt. Die äußere Dichtlippe 44 verhindert insbesondere ein Eindringen von Schmutz in den Hohlraum 58, d.h. die zumindest zwei Dichtlippen 42, 44 nehmen unterschiedliche Funktionen wahr.

Es wäre zudem denkbar, dass zwischen den Abdichtelementen 38, 38' und den zumindest zwei weiteren Abdichtelementen 54 jeweils ein erstes Schmiermittel eingesetzt oder eingebracht wird, und dass zwischen den zwei weiteren Abdichtelementen 54 und den Wälz- und/oder Rollenelementen 36 ein zweites Schmiermittel eingesetzt oder eingebracht wird. Hierbei kann insbesondere vorgesehen sein, dass das erste Schmiermittel und das zweite Schmiermittel voneinander unterschiedliche Schmiereigenschaften und/oder jeweils unterschiedliche Viskositäten aufweisen können.

In der Fig. 4 ist in einer schematischen Perspektivansicht eine Ausführungsform des Gehäuses 48 abgebildet, welches die in den Figuren 2 und 3 beschriebene Lagereinheit 30 aufnehmen kann.

Das Gehäuse 48 setzt sich aus zumindest zwei Abschnitten zusammen. Insbesondere setzt sich das Gehäuse 48 aus einem zylindrischen Abschnitt 60 und aus einem Befestigungsabschnitt 62 zusammen. Sowohl der zylindrische Abschnitt 60 als auch der Befestigungsabschnitt 62 des Gehäuses 48 umfassen eine Aufnahme, mittels welcher die Wälzlagereinheit 30 aufgenommen werden kann. Dabei ist ein Innendurchmesser des Gehäuses 48 bzw. der Aufnahme korrespondierend zum Außendurchmesser des Außenrings 34 ausgebildet. Vorzugsweise umfasst das Gehäuse 48 eine Innenfläche bzw. Innenmantelfläche, welche korrespondierend zur Kontur der Außenmantelfläche des Außenrings 34 ausgebildet ist. Gemäß der Fig. 4 ist eine Innenfläche bzw. Innenmantelfläche des Gehäuses plan ausgebildet.

Der Befestigungsabschnitt 62 ist im Gegensatz zum zylindrischen Abschnitt 60 durch einen quadratischen Querschnitt gebildet. Der Befestigungsabschnitt 62 umfasst zumindest vier Bohrungen 64, von denen in der Fig. 4 nur drei abgebildet sind. Die Aufnahme des Gehäuses 48 und damit die vom Gehäuse 48 aufgenommene Lagereinheit 30 kann mittels einer hier nicht dargestellten Abdeckplatte verschlossen werden, indem die Abdeckplatte beispielsweise über Schrauben, welche in die zumindest vier Bohrungen 64 eingesetzt werden können, an einer Stirnseite des Gehäuses 48, insbesondere des Befestigungsabschnitts 62 montiert und/oder befestigt wird.

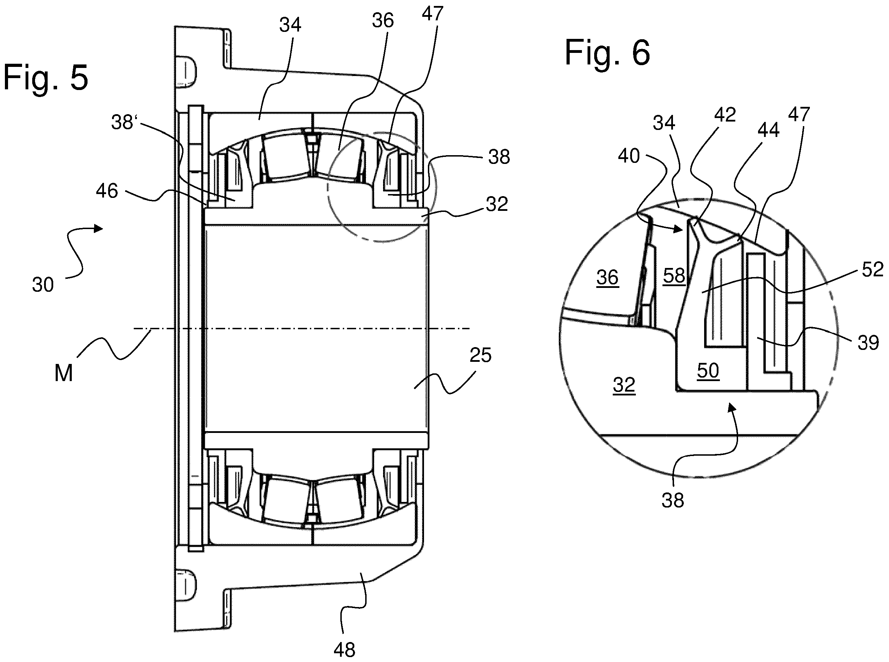

Die Fig. 5 zeigt in einem weiteren Längsschnitt eine alternative Ausführungsform der erfindungsgemäßen Wälzlagereinheit 30, die insbesondere der Lagerung einer Packerwelle 24 der in Fig. 1 gezeigten landwirtschaftlichen Bodenbearbeitungsvorrichtung 10 dienen kann.

Auch die in Fig. 5 gezeigte Variante der Wälzlagereinheit 30 oder Lagereinheit 30 umfasst einen Innenring 32 mit einem definierten Innendurchmesser und hohlzylindrischem Lagersitz zur Aufnahme einer zu lagernden Welle o. dgl. (nicht gezeigt). Durch den Innendurchmesser des Innenrings 32 wird eine Aufnahme bereitgestellt, welche korrespondierend zu den an der rotierenden Welle 24 (vgl. Fig. 1) stirnseitig angebrachten Lagerstummeln 25 ausgebildet ist; d.h. die Aufnahme des Innenrings 32 kann jeweils die Lagerstummel 25 der rotierenden Welle 24 zumindest abschnittsweise aufnehmen.

Die Wälzlagereinheit 30 umfasst weiterhin den bereits in Fig. 2 erläuterten Außenring 34, welcher koaxial zum Innenring 32 angeordnet ist; d.h. der Innenring 32 und der Außenring 34 weisen die gemeinsame Mittelachse M auf. Der Außenring 34 weist einen Innendurchmesser auf, welcher größer ist als der Innendurchmesser und Außendurchmesser des Innenrings 32.

Zwischen Innenring 32 und Außenring 34, insbesondere zwischen einer Innenmantelfläche des Außenrings 34 und einer Außenmantelfläche 46 des Innenrings 32, sind in zwei Reihen angeordnete leicht tonnenförmig ausgebildete Wälzkörper 36 oder Wälz- und/oder Rollelemente 36 vorgesehen, welche zwischen dem Innenring 32 und dem Außenring 34 wälzend und/oder rotierend angeordnet sind.

Wie dies aus der Fig. 5 weiter hervorgeht, ist die Innenmantelfläche 47 des Außenrings 34 leicht nach innen gewölbt ausgebildet, insbesondere in kugeliger Kontur, so dass insbesondere die zumindest zwei in Reihen angeordneten Wälz- und/oder Rollenelemente 36 entlang der Innenmantelfläche 47 des Außenrings 34 wälzen und/oder rotieren können. Zudem kann durch diese gewölbte oder kugelige Kontur der Innenmantelfläche 47 der Innenring 32 mitsamt den Wälzkörpern 36 zumindest geringfügig aus der koaxialen Lage gebracht werden, wie dies in der Fig. 7 schematisch dargestellt ist.

Zur axialen Abdichtung der Wälzlagereinheit 30, insbesondere der hier in zwei Reihen angeordneten Wälzkörper oder Wälz- und/oder Rollenelemente 36, sind beidseitig zumindest zwei Abdichtelemente 38, 38' vorgesehen. Die hier jeweils als Wellendichtringe ausgebildeten Abdichtelemente 38, 38' sind jeweils gegen eine stirnseitige Anlagefläche des stufenartig ausgebildeten Innenrings 32 geschoben und sitzen dort fest, während ihre flexiblen Dichtkanten oder Dichtlippen 42 und 44 gemäß Fig. 6 mit der Innenmantelfläche 47 des Außenrings 34 in Oberflächenkontakt stehen und/oder auf der Innenmantelfläche 47 des Außenrings 34 auf- oder anliegen, so dass dort jeweils eine Dichtfläche gebildet wird. Bei dieser Dichtfläche handelt es sich insbesondere um eine äußere Dichtfläche.

Wie dies weiterhin aus der Fig. 5 und aus der Fig. 6 hervorgeht, ist die Kontur der Innenmantelfläche 47 des Außenrings 34 durchgängig und im Längsschnitt mit konstanter konvexer Wölbung ausgebildet. Die zumindest zwei in Reihen angeordneten Wälz- und/oder Rollenelemente 36 sind etwa im mittleren Bereich der Innenmantelfläche 47 des Außenrings 34 angeordnet und liegen in diesem Bereich auf der Innenmantelfläche 47 des Außenrings 34 auf, so dass dieser Bereich der Innenmantelfläche 47 des Außenrings 34 als tragender Bereich bezeichnet werden kann.

Insbesondere ist die Innenmantelfläche 47 des Außenrings 34 im tragenden Bereich der zumindest zwei in Reihen angeordneten Wälz- und/oder Rollenelemente 36 zumindest abschnittsweise konkav zu einer Mittelachse M der Lagereinheit 30 ausgebildet. Diese konkave Gestaltung ist an die leicht tonnenförmige Außenkontur der Wälzkörper 36 angepasst, so dass diese dort jeweils in linienartiger Berührung anliegen können.

Wie weiter aus der Fig. 5 hervorgeht, setzt sich die konkave Wölbung der Innenmantelfläche 47 des Außenrings 34 in den Bereich der Dichtfläche fort, so dass auch die Dichtkanten oder Dichtlippen 42, 44 der als Wellendichtringe ausgebildeten Abdichtelemente 38, 38' an derselben Innenmantelfläche 47 anliegen, unabhängig von der Achsausrichtung des Innenrings 32 gegenüber dem Außenring 34 (vgl. hierzu Fig. 7 und Fig. 8).

In der Fig. 6 ist im Detail die Abdichtung der Wälzlagereinheit 30 mittels eines der beiden in Fig. 5 dargestellten Abdichtelemente 38 dargestellt. Die beiden Abdichtelemente 38, 38' sind jeweils L-förmig ausgebildet und umfassen einen kurzen bzw. kürzeren Steg 50 und einen langen bzw. längeren Steg 52. Der kurze Steg 50 der zumindest zwei Abdichtelemente 38, 38' ist auf einen Abschnitt des Innenrings 32 kleineren Durchmessers als die innere Lagerfläche geschoben und/oder montiert. Der lange Steg 52 verläuft im Wesentlichen parallel zu einer Stirnseite des Gehäuses 48. Insbesondere ist der lange Steg 52 zumindest weitgehend senkrecht zur Mittelachse M angeordnet. Wie es die Fig. 6 verdeutlicht, liegt der lange Steg 52 an einem stufenförmigen Absatz des Innenrings 32 an.

Vom nach außen weisenden langen Steg 52 des in Fig. 6 gezeigten Abdichtelements 38 erstrecken sich zumindest zwei Dichtlippen 40, welche in eine innere Dichtlippe 42 und in eine äußere Dichtlippen 44 unterschieden werden können. Die zumindest zwei Dichtlippen 40 können winkelig und damit beabstandet zueinander angeordnet sein. Die zumindest zwei Dichtlippen 40 sind derart angeordnet, dass diese gegen die Innenmantelfläche 47 des Außenrings 34 gepresst und/oder gestaucht werden oder dort zumindest unter leichter Vorspannung anliegen. Insbesondere werden die zumindest zwei Dichtlippen 40; 42, 44 gegen denjenigen Bereich bzw. Abschnitt der Innenmantelfläche 47 des Außenrings 34 gedrückt oder gepresst, der normalerweise keinen konkav geformten Lagersitz mehr bildet, sondern stufenlos und ohne Wölbungsänderung zu beiden Seiten an diesen anschließt. Auf diese Weise kann eine Dichtfläche, insbesondere eine äußere Dichtfläche, ausgebildet werden.

Damit können die Dichtlippen 40 bei einem Verkippen und/oder bei einem Neigen des Innenrings 32 mit den darauf liegenden zumindest in zwei Reihen angeordneten Wälz- und/oder Rollenelementen 36 gegenüber dem Außenring 34 (vgl. Fig. 7 und Fig. 8) entlang der konkav gewölbten und durchgängig mit gleicher Wölbung ausgebildeten Innenmantelfläche 47 des Außenrings 34 gleiten und somit für die gewünschte Abdichtung der Wälzlagereinheit 30 sorgen.

Gemäß der Fig. 3 können wahlweise auch bei der in Fig. 5 und Fig. 6 gezeigten Variante zwei weitere Abdichtelemente 54 vorgesehen sein, welche für eine zusätzliche Abdichtung der Lagereinheit 30 sorgen können, was hier jedoch nicht gezeigt ist. Die Fixierung der Abdichtelemente 38, 38' auf dem zylindrischen Abschnitt des Innenrings 32 kann bspw. mittels geeigneter Scheiben 39 erfolgen, die außen gegen die kurzen Stege 52 der Abdichtelemente 38, 38' geschoben sind und diese am Einbauort fixieren.

Zwischen den zumindest zwei Abdichtelementen 38, 38' und damit innerhalb des Bereiches der Wälzkörper 36 wird ein gemeinsamer Hohlraum 58 ausgebildet (vgl. Fig. 6), welcher mit zumindest einem hier nicht dargestellten Schmiermittel befüllt werden kann. Das zumindest eine Schmiermittel kann beispielsweise durch Fett oder dergleichen ausgebildet sein, welches dazu geeignet ist, die Lagereinheit 30 ausreichend zu schmieren.

Das Auslaufen und/oder Austreten des zumindest einen im Hohlraum 58 befindlichen Schmiermittels wird insbesondere mittels der inneren Dichtlippe 42 verhindert, da diese für eine Abdichtung des Hohlraums 58 sorgt. Die äußere Dichtlippe 44 verhindert insbesondere ein Eindringen von Schmutz in den Hohlraum 58, d.h. die zumindest zwei Dichtlippen 42, 44 nehmen unterschiedliche Funktionen wahr.

Der schematische Längsschnitt der Fig. 7 zeigt nochmals die in den Figuren 5 und 6 gezeigte alternative Ausführungsvariante der Wälzlagereinheit 30, wobei hier der innere Lagerring 32 mitsamt den dort gelagerten Wälzkörpern 36 gegenüber dem äußeren Lagerring 34 leicht verkippt und aus der exakt koaxialen Lage gebracht ist. Die Fig. 8 zeigt in einem Detail-Längsschnitt die in Fig. 7 gezeigte verkippte Lage der dort im Längsschnitt dargestellten Wälzlagereinheit 30.

Bei allen Varianten der Wälzlagereinheit 30, wie sie in den Figuren 2 bis 6 gezeigt sind, ist der Innenring 32 mit den darauf liegenden zumindest zwei in Reihen angeordneten Wälz- und/oder Rollenelementen 36 gegenüber dem Außenring 34 verkippbar und/oder neigbar.

Da bei der in den Figuren 2 und 3 gezeigten Lagervariante die Außenmantelfläche 46 des Innenrings 32 im Bereich der Dichtfläche konvex zu einer Mittelachse M der Wälzlagereinheit 30 ausgebildet ist, können die zumindest zwei Abdichtelemente 38, 38' unabhängig vom Grad der Verkippung und/oder der Neigung des Innenrings 32 mit den darauf liegenden zumindest zwei in Reihen angeordneten Wälz- und/oder Rollenelementen 36 gegenüber dem Außenring 34 mit der Außenmantelfläche 46 des Innenrings 32 in Oberflächenkontakt stehen und für eine sichere und permanente Abdichtung sorgen.

Da weiterhin bei der in den Figuren 5 und 6 gezeigten Lagervariante die Innenmantelfläche 47 des Außenrings 34 im Bereich der Dichtfläche konkav zu einer Mittelachse M der Wälzlagereinheit 30 ausgebildet ist, können die zumindest zwei Abdichtelemente 38, 38' unabhängig vom Grad der Verkippung und/oder der Neigung des Innenrings 32 mit den darauf liegenden zumindest zwei in Reihen angeordneten Wälz- und/oder Rollenelementen 36 gegenüber dem Außenring 34 mit der Innenmantelfläche 47 des Auenrings 34 in Oberflächenkontakt bleiben und weitgehend unabhängig von der Winkellage für eine sichere und permanente Abdichtung sorgen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Landwirtschaftliches Bodenbearbeitungsgerät
- 12: Maschinenrahmen
- 14: Bodenbearbeitungswerkzeug; Arbeitswerkzeug
- 16: Federzinken
- 18: Reihen
- 20: Packereinheit, Packerwalze
- 22: Packerringe
- 24: Welle
- 25: Lagerstummel
- 26: Querträger
- 28: Stellelement
- 30: Lagereinheit, Wälzlagereinheit
- 32: Innenring
- 34: Außenring
- 36: Wälz- und/oder Rollenelemente
- 38: Abdichtelement
- 38': Abdichtelement
- 39: Scheibe
- 40: Dichtlippe
- 42: innere Dichtlippe
- 44: äußere Dichtlippe
- 46: Außenmantelfläche des Innenring
- 47: Innenmantelfläche des Außenrings
- 48: Gehäuse
- 50: kurzer Steg; Kürzerer Steg
- 52: langer Steg; längerer Steg
- 54: weiteres Abdichtelement
- 56: Aussparung, Nut
- 58: Hohlraum
- 60: zylindrischer Abschnitt des Gehäuses
- 62: Befestigungsabschnitt des Gehäuses
- 64: Bohrung
- F: Fahrtrichtung
- M: Mittelachse

## Patentansprüche

1. Abgedichtete Wälzlagereinheit (30) zur Lagerung von Arbeitswerkzeugen (14) oder dergleichen, welche Wälzlagereinheit (30) zumindest abschnittsweise von einem Gehäuse (48) aufgenommen ist, und welche Wälzlagereinheit (30) zumindest umfasst:
- einen Innenring (32) und einen koaxial dazu angeordneten Außenring (34), wobei der Innenring (32) und der Außenring (34) koaxial zum Gehäuse (48) angeordnet sind,
- zumindest in einer Reihe angeordnete Wälz- und/oder Rollenelemente (36), welche zwischen dem Innenring (32) und dem Außenring (34) wälzend und/oder rotierend angeordnet sind,
- zumindest zwei Abdichtelemente (38, 38'), welche die zumindest in einer Reihe angeordnete Wälz- und/oder Rollenelemente (36) beidseitig axial abdichten,
**dadurch gekennzeichnet, dass** wenigstens eines der zumindest zwei Abdichtelemente (38, 38' ) am Gehäuse (46) befestigt ist und mit einer Außenmantelfläche (46) des Innenrings (32) in Oberflächenkontakt steht und/oder auf der Außenmantelfläche (46) des Innenrings (32) aufliegt, so dass eine Dichtfläche ausgebildet wird, wobei die Außenmantelfläche (46) des Innenrings (32) im Bereich der Dichtfläche zumindest abschnittsweise konvex zu einer Mittelachse (M) der Wälzlagereinheit (30) ausgebildet ist,
oder dass wenigstens eines der zumindest zwei Abdichtelemente (38, 38' ) am Gehäuse (46) befestigt ist und mit einer Innenmantelfläche (47) des Außenrings (34) in Oberflächenkontakt steht und/oder auf der Innenmantelfläche (47) des Außenrings (34) aufliegt, so dass eine Dichtfläche ausgebildet wird, wobei die Innenmantelfläche (47) des Außenrings (34) im Bereich der Dichtfläche zumindest abschnittsweise konkav zu einer Mittelachse (M) der Wälzlagereinheit (30) ausgebildet ist.

2. Wälzlagereinheit nach Anspruch 1, bei welcher die Außenmantelfläche (46) des Innenrings (32) im tragenden Bereich der in wenigstens einer Reihe angeordneten Wälz- und/oder Rollenelemente (36) zumindest abschnittsweise konkav zu einer Mittelachse (M) der Lagereinheit (30) ausgebildet ist.

3. Wälzlagereinheit nach einem der vorherigen Ansprüche, bei welcher wenigstens eines der zumindest zwei Abdichtelemente (38, 38') zumindest zwei Dichtlippen (40) umfasst, welche winkelig zueinander angeordnet sind.

4. Wälzlagereinheit nach einem der Ansprüche 1 bis 3, bei welcher das Gehäuse (48) mit zumindest einer Stirnseite auf der Außenmantelfläche (46) des Innenrings (32) bündig aufliegt und/oder in Oberflächenkontakt steht.

5. Wälzlagereinheit nach einem der vorherigen Ansprüche, bei welcher zumindest ein weiteres Abdichtelement (54) vorgesehen ist, welche die in wenigstens einer Reihe angeordneten Wälz- und/oder Rollenelemente (36) einseitig oder beidseitig axial abdichten, so dass eine weitere Dichtfläche ausgebildet wird.

6. Wälzlagereinheit nach einem der vorherigen Ansprüche, bei welcher zwischen wenigstens einem der zumindest zwei Abdichtelemente (38, 38') und dem zumindest einen weiteren Abdichtelement (54) ein Hohlraum (58) vorgesehen ist und/oder ausgebildet ist.

7. Wälzlagereinheit nach einem der vorherigen Ansprüche, bei welcher der Hohlraum (58) mit zumindest einem Schmiermittel befüllbar ist und/oder befüllt ist.

8. Wälzlagereinheit nach einem der vorherigen Ansprüche, bei welcher zwischen den Abdichtelementen (38, 38') und den zumindest zwei weiteren Abdichtelementen (54) ein erstes Schmiermittel eingesetzt oder eingebracht ist, und bei welcher zwischen den zwei weiteren Abdichtelementen (54) und den Wälz- und/oder Rollenelementen (36) ein zweites Schmiermittel eingesetzt oder eingebracht ist.

9. Wälzlagereinheit nach Anspruch 8, bei welcher das erste Schmiermittel und das zweite Schmiermittel durch jeweils unterschiedliche Schmiermittelsorten gebildet sind, oder wobei das erste Schmiermittel und das zweite Schmiermittel jeweils unterschiedliche Schmiereigenschaften und/oder Viskositäten aufweisen.

10. Landwirtschaftliche Maschine mit mindestens einem landwirtschaftlichen Arbeitswerkzeug (14) oder dergleichen, insbesondere mit mindestens einem rotierenden landwirtschaftlichen Arbeitswerkzeug (14), wobei das landwirtschaftliche Arbeitswerkzeug (14) über eine gemäß einem der Ansprüche 1 bis 9 ausgebildete Wälzlagereinheit (30) am Maschinenrahmen (12) der landwirtschaftlichen Maschine gelagert ist.

11. Landwirtschaftliche Maschine gemäß Anspruch 10, bei welcher das mindestens eine landwirtschaftliche Arbeitswerkzeug (14) stirnseitig jeweils einen Lagerstummel (25) umfasst, welche Lagerstummel (25) jeweils zumindest abschnittsweise von der Wälzlagereinheit (30) aufgenommen sind.

## Claims

1. A sealed rolling bearing unit (30) for bearing working tools (14) or the like, which rolling bearing unit (30) is at least in sections accommodated by a housing (48), and which rolling bearing unit (30) comprises at least:
- an inner ring (32) and an outer ring (34) arranged coaxially relative thereto, wherein the inner ring (32) and the outer ring (34) are arranged coaxially relative to the housing (48),
- rolling elements (36), which are arranged in at least one row, which rolling elements (36) are arranged in a rolling and/or rotating manner between the inner ring (32) and the outer ring (34),
- at least two sealing elements (38, 38'), which on both sides axially seal off the rolling elements (36), which are arranged in at least one row,
**characterised in that** at least one of the at least two sealing elements (38, 38') is attached to the housing (46) and is in surface contact with an outer lateral surface (46) of the inner ring (32) and/or bears on the outer lateral surface (46) of the inner ring (32) such that a sealing surface is formed, wherein the outer lateral surface (46) of the inner ring (32) is designed to be at least in sections convex to a central axis (M) of the rolling bearing unit (30) in the area of the sealing surface,
or **in that** at least one of the at least two sealing elements (38, 38') is attached to the housing (46) and is in surface contact with an inner lateral surface (47) of the outer ring (34) and/or bears on the inner lateral surface (47) of the outer ring (34) such that a sealing surface is formed, wherein the inner lateral surface (47) of the outer ring (34) is designed to be at least in sections concave to a central axis (M) of the rolling bearing unit (30) in the area of the sealing surface.

2. The rolling bearing unit according to claim 1, in which the outer lateral surface (46) of the inner ring (32) is designed to be at least in sections concave to a central axis (M) of the bearing unit (30) in the bearing area of the rolling elements (36) arranged in at least one row.

3. The rolling bearing unit according to one of the previous claims, in which at least one of the at least two sealing elements (38, 38') comprises at least two sealing lips (40), which are arranged angularly relative to one another.

4. The rolling bearing unit according to one of the claims 1 to 3, in which at least one front end of the housing (48) bears flush on and/or is in surface contact with the outer lateral surface (46) of the inner ring (32).

5. The rolling bearing unit according to one of the previous claims, in which at least one further sealing element (54) is provided, which on one side or on both sides axially seals off the rolling elements (36), which are arranged in at least one row, such that a further sealing surface is formed.

6. The rolling bearing unit according to one of the previous claims, in which a cavity (58) is provided and/or formed between at least one of the at least two sealing elements (38, 38') and the at least one further sealing element (54).

7. The rolling bearing unit according to one of the previous claims, in which the cavity (58) is fillable and/or filled with at least one lubricant.

8. The rolling bearing unit according to one of the previous claims, in which a first lubricant is placed or inserted between the sealing elements (38, 38') and the at least two further sealing elements (54), and in which a second lubricant is placed or inserted between the two further sealing elements (54) and the rolling elements (36).

9. The rolling bearing unit according to claim 8, in which the first lubricant and the second lubricant are each formed by different types of lubricants, or wherein the first lubricant and the second lubricant each have different lubricating properties and/or viscosities.

10. An agricultural machine with at least one agricultural working tool (14) or the like, in particular, with at least one rotating agricultural working tool (14), wherein the agricultural working tool (14) is born on the machine frame (12) of the agricultural machine via a rolling bearing unit (30) designed according to one of the claims 1 to 9.

11. The agricultural machine according to claim 10, in which the at least one agricultural working tool (14) in each case comprises a bearing stub (25) on the front end, which bearing stubs (25) are in each case at least in sections accommodated by the rolling bearing unit (30).

## Revendications

1. Unité de palier à roulement (30) étanchée pour supporter des outils de travail (14) ou similaires, laquelle unité de palier à roulement (30) est reçue au moins par sections par un boîtier (48), et laquelle unité de palier à roulement (30) comprend au moins:
- une bague intérieure (32) et une bague extérieure (34) disposée de façon coaxiale à celle-ci, dans laquelle la bague intérieure (32) et la bague extérieure (34) sont disposées de façon coaxiale au boîtier (48),
- des éléments roulants et/ou à rouleaux (36) disposés en au moins une rangée, qui esont disposés en roulement et/ou en rotation entre la bague intérieure (32) et la bague extérieure (34),
- au moins deux éléments d'étanchéité (38, 38') qui rendent étanche axialement des deux côtés les éléments roulants et/ou à rouleaux (36) disposés en au moins une rangée,
**caractérisée par le fait qu'**au moins l'un desdits au moins deux éléments d'étanchéité (38, 38') est fixé au boîtier (46) et est en contact superficiel avec une surface latérale extérieure (46) de la bague intérieure (32) et/ou s'appuie sur la surface latérale extérieure (46) de la bague intérieure (32) de telle sorte qu'une surface d'étanchéité soit formée, dans laquelle la surface latérale extérieure (46) de la bague intérieure (32) au niveau de la surface d'étanchéité est réalisée au moins par sections de manière convexe par rapport à un axe central (M) de l'unité de palier à roulement (30), ou qu'au moins l'un desdits au moins deux éléments d'étanchéité (38, 38') est fixé au boîtier (46) et est en contact superficiel avec une surface latérale intérieure (47) de la bague extérieure (34) et/ou s'appuie sur la surface latérale intérieure (47) de la bague extérieure (34) de telle manière qu'une surface d'étanchéité soit formée, dans laquelle la surface latérale intérieure (47) de la bague extérieure (34) au niveau de la surface d'étanchéité est réalisée au moins par sections de manière concave par rapport à un axe central (M) de l'unité de palier à roulement (30).

2. Unité de palier à roulement selon la revendication 1, dans laquelle la surface latérale extérieure (46) de la bague intérieure (32) dans la zone porteuse des éléments roulants et/ou à rouleaux (36) disposés en au moins une rangée est réalisée au moins par sections de manière concave par rapport à un axe central (M) de l'unité de palier (30).

3. Unité de palier à roulement selon l'une quelconque des revendications précédentes, dans laquelle au moins l'un desdits au moins deux éléments d'étanchéité (38, 38') comprend au moins deux lèvres d'étanchéité (40) qui sont disposées angulairement l'une par rapport à l'autre.

4. Unité de palier à roulement selon l'une quelconque des revendications 1 à 3, dans laquelle le boîtier (48) repose, par au moins une face frontale, à fleur sur la surface latérale extérieure (46) de la bague intérieure (32) et/ou est en contact superficiel.

5. Unité de palier à roulement selon l'une quelconque des revendications précédentes, dans laquelle est prévu au moins un autre élément d'étanchéité (54) qui étanche axialement, d'un côté ou des deux côtés, les éléments roulants et/ou à rouleaux (36) disposés en au moins une rangée, de sorte qu'une autre surface d'étanchéité soit formée.

6. Unité de palier à roulement selon l'une quelconque des revendications précédentes, dans laquelle une cavité (58) est prévue et/ou formée entre au moins l'un desdits au moins deux éléments d'étanchéité (38, 38') et ledit au moins un autre élément d'étanchéité (54).

7. Unité de palier à roulement selon l'une quelconque des revendications précédentes, dans laquelle la cavité (58) peut être remplie et/ou est remplie d'au moins un lubrifiant.

8. Unité de palier à roulement selon l'une quelconque des revendications précédentes, dans laquelle un premier lubrifiant est inséré ou introduit entre les éléments d'étanchéité (38, 38') et lesdits au moins deux autres éléments d'étanchéité (54), et dans laquelle un deuxième lubrifiant est inséré ou introduit entre les deux d'autres éléments d'étanchéité (54) et les éléments roulants et/ou à rouleaux (36).

9. Unité de palier à roulement selon la revendication 8, dans lequel le premier lubrifiant et le deuxième lubrifiant sont chacun formés de types de lubrifiant différents, ou dans laquelle le premier lubrifiant et le deuxième lubrifiant ont chacun des propriétés lubrifiantes et/ou des viscosités différentes.

10. Machine agricole comprenant au moins un outil de travail agricole (14) ou similaire, en particulier au moins un outil de travail agricole (14) rotatif, dans laquelle l'outil de travail agricole (14) est supporté par le biais d'une unité de palier à roulement (30) conçue selon l'une quelconque des revendications 1 à 9, sur le bâti de machine (12) de la machine agricole.

11. Machine agricole selon la revendication 10, dans laquelle ledit au moins un outil de travail agricole (14) comprend sur la face frontale respectivement un bout de support (25), lequels bouts de support (25) sont reçus respectivement au moins par sections par l'unité de palier à roulement (30).
